# EUROPEAN PATENT SPECIFICATION

(11) **EP 2 347 141 B1**
(45) Date of publication and mention of the grant of the patent: **08.05.2013**
(21) Application number: 09760609.9
(22) Date of filing: 12.11.2009
(51) Int. Cl.: F16C 29/04, F16C 33/62, F16C 33/64, F16C 33/66, F16C 29/06, F16C 29/00

(54) **LINEAR GUIDE RAIL AND METHOD FOR THE MANUFACTURE THEREOF**
LINEARFÜHRUNGSSCHIENE UND HERSTELLUNGSVERFAHREN
RAIL DE GUIDAGE LINÉAIRE ET PROCÉDÉ DE FABRICATION DE CELUI-CI

(30) Priority: 18.11.2008 IT MI20082050
(43) Date of publication of application: 27.07.2011
(73) Proprietor: T Race S.P.A., 20050 Ronco Briantino (MB) (IT)
(72) Inventor: BOLZONARO, Loris, I-20058 Villasanta (MI) (IT)
(74) Representative: Belloni, Giancarlo
(86) International application number: PCT/IB2009/055036
(87) International publication number: WO 2010/058331

(56) References cited:
- EP-A- 1 225 353
- EP-A1- 0 971 141
- JP-A- 2007 177 896
- US-A- 5 618 114

## Description

The present invention relates to a linear guide rail and in particular relates to a guide rail suitable for the linear movement of loads.

Such a linear guide rail is known from US 5 618 114 A.

It is known to use linear guide rails for displacing loads, such as parts of machinery, in connection with industrial automation, biomedical apparatus, or the like.

Different types of linear guide rails are known. The known linear guide rails which are similar to those of the invention are commonly composed of a metal section which extends along the path along which the load is to be moved. A slider, which is suitable for receiving the load mounted thereon, is free to move along the section. The contact between the slider and the guide rail is provided by means of rolling elements, such as wheels, balls, rollers or the like. The wheels in turn are preferably mounted on rolling bearings.

A fairly common example is that where the slider comprises a number of wheels and the guide rail comprises raceways suitable for contact with the wheels.

In this case, the entire load is therefore transferred by the surfaces making contact between the wheels and the linear guide rail. Since such surfaces are usually fairly small and the movement of the slider along the guide rail is fairly frequent, it is required to harden superficially the raceways on which the wheels rest.

The known method for manufacturing the guide rails is described below.

The rough-formed guides are drawn sections with the desired cross-section and to a length of up to 4 metres. The rough-formed guides are made of steel, preferably C43, C50 or 100Cr6.

A first step consists in increasing the surface hardness of the raceways of the rolling elements. This step normally consists in surface tempering by means of induction. Usually the tempering step, in addition to hardening the raceways, has the effect of bending, warping and/or twisting the guide rails.

A second step therefore consists in first straightening of the guide rails. This straightening operation is usually performed by passing the guide rails through a series of rollers which are oriented in the various useful directions.

A third step consists in washing the guide rails, this being necessary in order to remove the residual oil arising from the tempering step.

A fourth step consists in sandblasting the guide rails.

A fifth step consists in boring the guide rails, necessary for providing the securing points useful for operational assembly. During this step the holes break up the continuity of the fibres, thereby altering the internal stress conditions which kept the guide rails straight. A secondary effect of boring is therefore that of causing bending again of the guide rails.

A sixth step consists in galvanization, i.e. zinc-plating, of the guide rails, which is required in order to ensure sufficient protection against corrosion.

A seventh step then consists in further straightening of the guide rails. This straightening operation may be performed by means of two alternative methods: either by means of a manual operating machine or by means of an automatic operating machine. These machines act by applying suitable bending moments to the curved sections of the guide rails.

An eighth step consists in grinding of the raceways. During this step the surface abrasion alters the internal stress conditions which kept the guide rails straight. A secondary effect of grinding is therefore again that of causing slight bending of the guide rails.

A ninth and final step therefore consists in further manual straightening of the guide rails.

From the above description, the person skilled in the art can easily understand how the large number of successive machining operations per se requires a large amount of work, with the need to handle the guide rails, displace them, position them, etc.

In particular it is clear how, starting with a substantially straight article such as a drawn section, there is necessarily a large amount of time and energy spent in order to obtain again an article (guide rail) which is equally straight.

Moreover, some of the machining operations described above, such as manual straightening during the seventh step, may require a large amount of time spent by specialized personnel. This results in a significant cost for the manufacture of the guide rails.

Alongside the production cost, it is also necessary to consider the huge outlay which is needed in order to purchase the machines and/or the apparatus needed to complete all the machining steps described above. It should be noted that, alongside machines commonly used in industry, there may also be machines which are produced especially for this specific use, such as the automatic straightening machine which can be used during the seventh step. These machines, also in view of their complexity, may require a very large outlay.

The object of the present invention is therefore to overcome at least partly the drawbacks mentioned above with reference to the prior art.

In particular, one task of the present invention is to provide a method for manufacturing linear guide rails which allows a substantial reduction in the amount of work and the outlay initially required for the machining of the guide rails.

Another task of the present invention is to provide a linear guide rail which has mechanical characteristics comparable to or superior to those of guide rails of the known type and with a lower manufacturing cost.

The abovementioned object and tasks are achieved by a linear guide rail according to Claim 1 and by a method for manufacturing linear guide rails according to Claim 6.

The characteristic features and further advantages of the invention will emerge from the description provided hereinbelow, of a number of examples of embodiments, provided by way of a non-limiting example, with reference to the accompanying drawings in which:
- Figure 1 shows a perspective view of an embodiment of the guide rail according to the invention and the associated slider slidably mounted thereon;
- Figure 2 shows a view, similar to that of Figure 1, in which the slider has been removed for greater clarity;
- Figure 3 shows a side view of the guide rail according to Figure 2;
- Figure 4 shows a cross-sectional view along the line IV-IV of Figure 3;
- Figure 5 shows a front view of the guide rail according to Figure 2 and the associated slider;

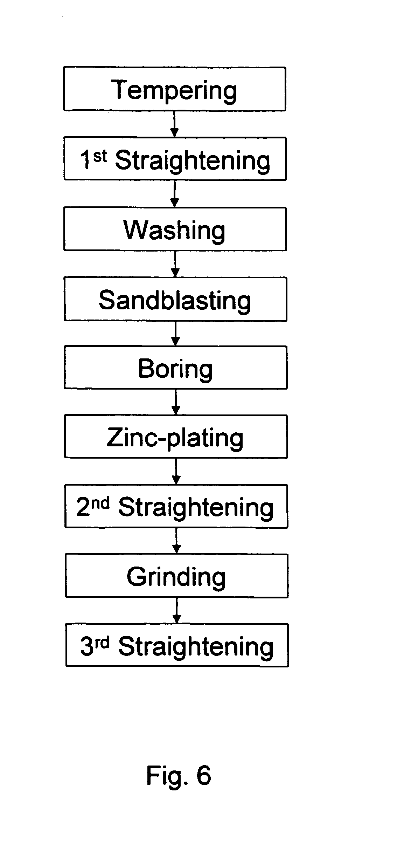

- Figure 6 illustrates in schematic form by means of a block diagram the method for obtaining the linear guide rails according to the prior art;

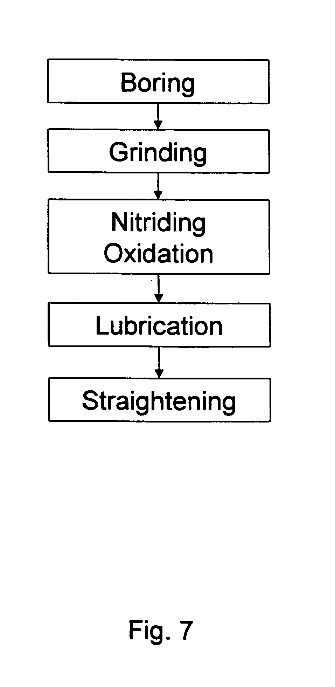

- Figure 7 illustrates in schematic form by means of a block diagram the method for obtaining the linear guide rails according to the invention;
- Figure 8 shows in schematic form the progression of the hardness plotted against the thickness of a raceway according to the prior art and of a raceway according to the invention;
- Figure 9 shows a perspective view of another embodiment of the guide rail according to the invention and the associated slider slidably mounted thereon;
- Figure 10 shows a cross-sectional view of the guide rail according to Figure 9;
- Figures 11 show, partially sectioned, a further embodiment of the guide rail according to the invention and the associated slider slidably mounted thereon in three different configurations;
- Figure 12 shows a side view of a further embodiment of the guide rail according to the invention and the associated slider slidably mounted thereon;
- Figure 13 shows a cross-sectional view along the line XIII-XIII in Figure 12.

With reference to the accompanying figures, 10 denotes in its entirety a linear guide rail for moving loads according to the invention. The guide rail 10 is suitable for co-operating with a slider 12. The contact between the guide rail 10 and the slider 12 is provided by means of rolling elements 14.

The guide 10, which is made of drawn steel, comprises raceways 16 which are suitable for making contact with the rolling elements 14, and holes 18 for operational assembly of the said guide rail 10. The surface of the raceways 16 is smoothed by means of abrasive tools and the surface of the guide rail 10 is treated by means of a nitriding/oxidation process and a micro-lubrication process.

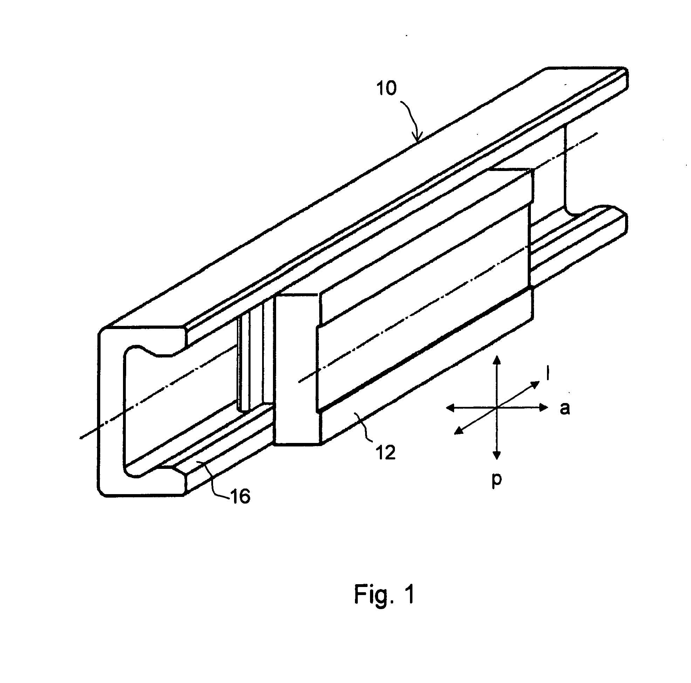

With particular reference to Figure 1, the reference system which will be used in the detailed description is now defined. The longitudinal direction is defined as being a direction parallel to the axis of the guide rail 10. This direction is indicated by "1" in Figure 1. The axial direction is defined as being a direction parallel to the axis of rotation of the rolling elements 14. This direction is indicated by "a" in Figure 1. Finally the perpendicular direction is defined as being a direction perpendicular to the longitudinal direction and the axial direction. This direction is indicated by "p" in Figure 1.

The linear guide rail 10 according to the invention is made of drawn steel. Preferably a nitriding or a case-hardening steel, with a carbon content of between about 0.15% and 0.24%, with a chromium content of between about 0.95% and 1.35% and with a manganese content of between about 1.04% and 1.64% is used. A steel which has proved to be particularly suitable for implementing the invention is that defined as 20MnCr5 according to the standard UNI EN ISO 7846-78.

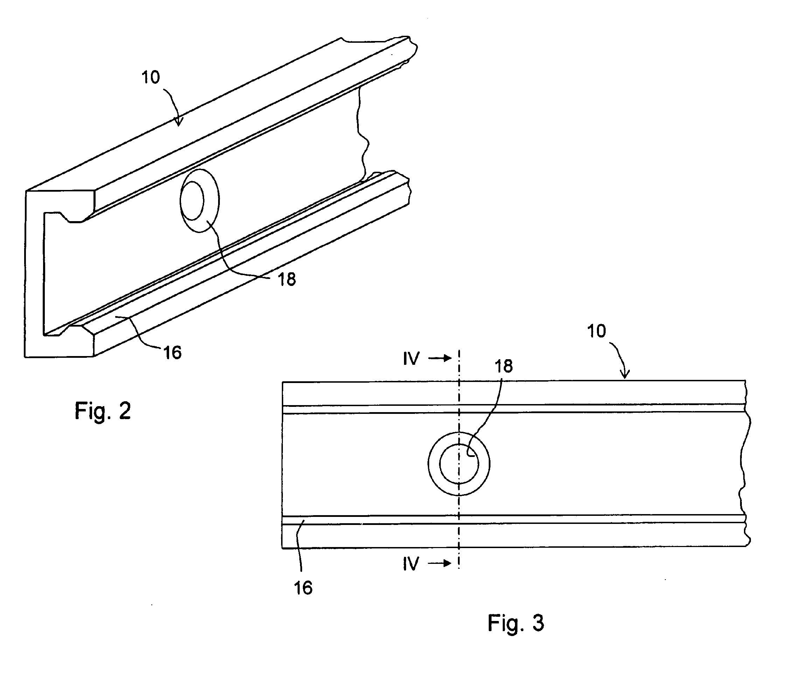

In the embodiment of the accompanying Figures 1 to 5, the single guide rail 10 has an overall C-shaped cross-section; the slider 12 is designed to be seated inside the "C" and has wheels which rest on the two flanges of the "C". The wheeled slider 12 may perform a travel stroke along the guide rail 10, which is not predetermined in terms of length.

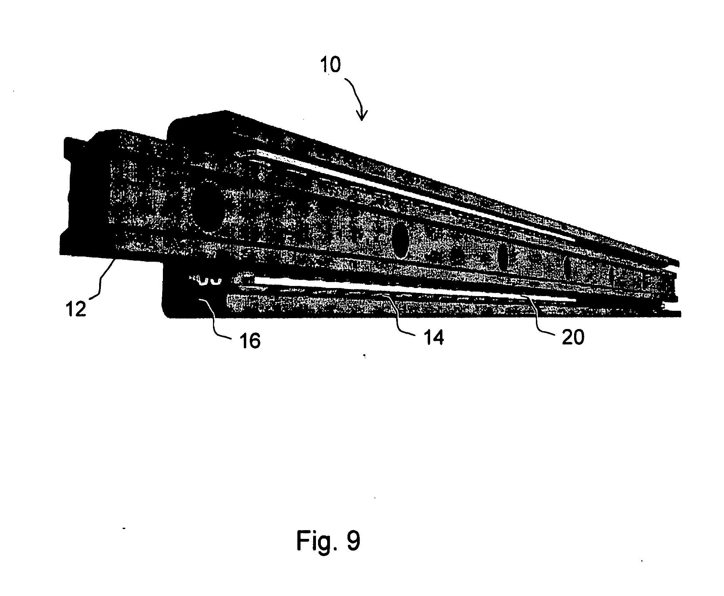

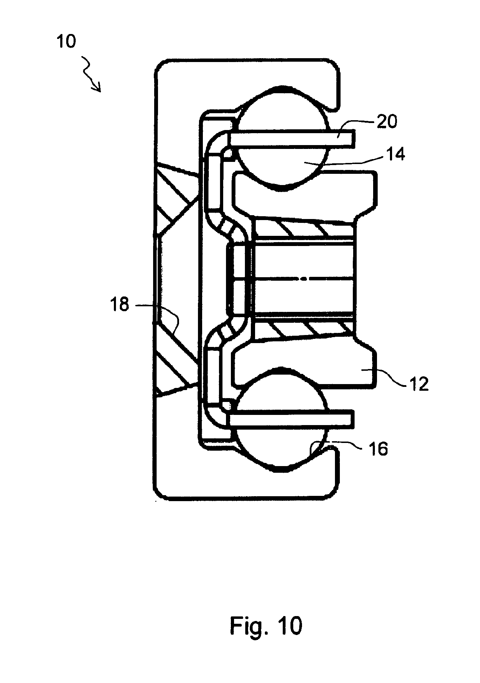

In the embodiment of the accompanying Figures 9 and 10, the single guide rail 10 has an overall C-shaped cross-section; the slider 12 is designed to be seated inside the "C" and has two series of balls which are suitably constrained inside a cage 20 and which rest on the two flanges of the "C". In this embodiment, the cage 20 and the balls move along the guide rail 10 together with the slider 12, travelling along half the distance travelled by the latter. In accordance with this solution, it is therefore necessary to provide a cage 20 with a length equal to half the maximum working stroke of the slider 12 along the guide rail 10.

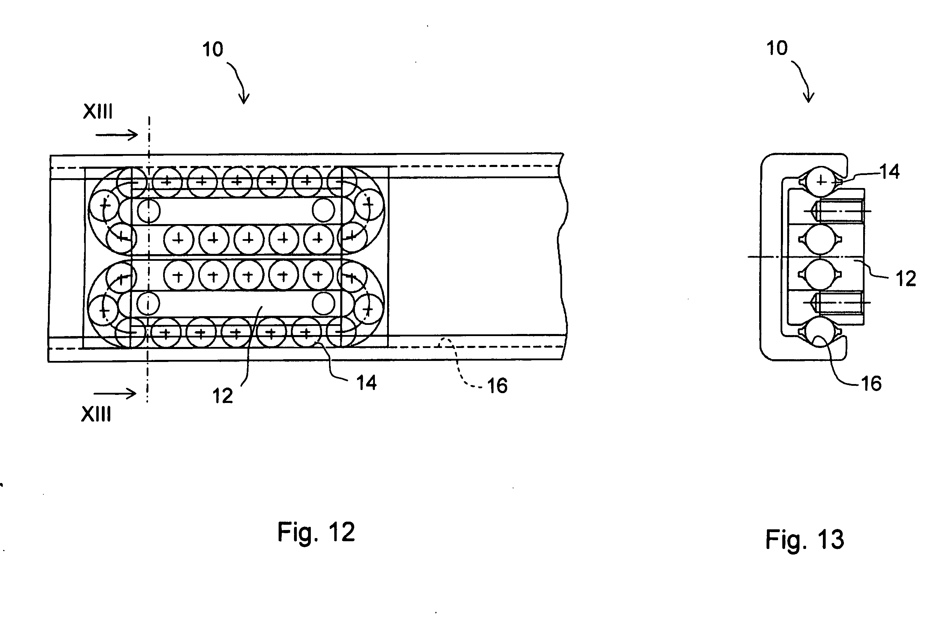

In accordance with the embodiment shown in Figures 12 and 13, the balls travel, in a manner known per se, along closed paths inside the slider 12. In this way the ball-mounted slider 12 may perform a travel stroke along the guide rail 10, which is not predetermined in terms of length.

In the embodiments described above in which the rolling elements 14 are balls, the slider 12 also comprises raceways for the balls. Obviously the raceways of the slider may be advantageously manufactured in accordance with the teachings of the method according to the invention.

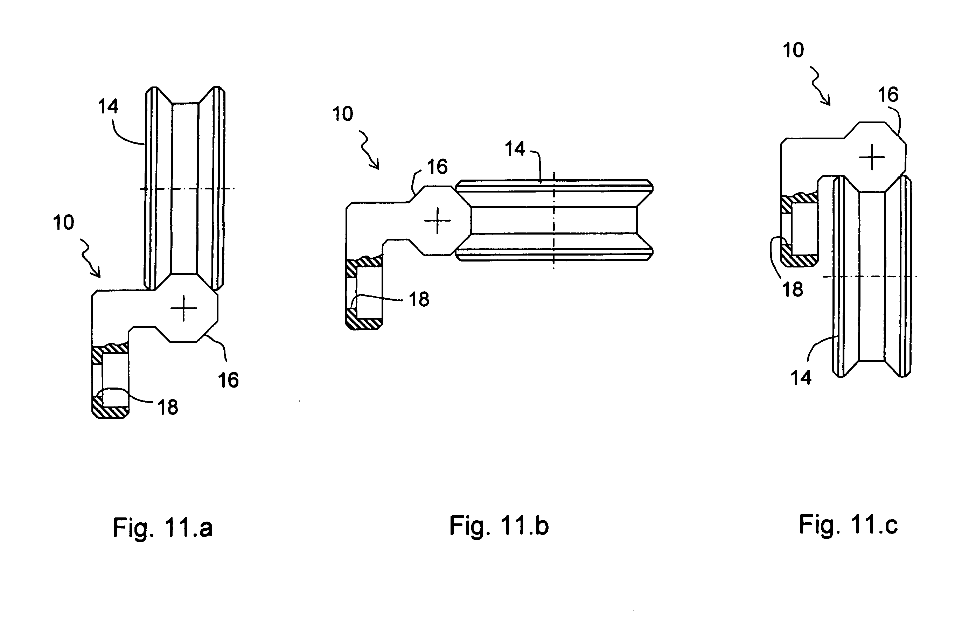

In the embodiment of the accompanying Figures 11, the single guide 10 has an overall L-shaped cross-section; the slider 12 is designed to rest on the bulb-like end of the "L" and has wheels.

In general, the shape of the guide rail 10 and the slider 12 must be such that the latter is free to move in the longitudinal direction, and is constrained in the axial direction and the perpendicular direction. In the case of the guide rails according to Figures 1 to 5, 9, 10, 12 and 13, this type of constraint is ensured by the C shape of the cross-section of the guide rail 10. In the case of the guide rails according to Figure 11, on the other hand, this type of constraint may be ensured by suitably mounting two L-shaped guide rails.

In accordance with certain embodiments which are not shown, the slider 12 may in turn comprise a guide rail portion on which a further slider able to support the load is mounted. This therefore produces, in a known manner, a telescopic guide rail. Both the fixed guide rail and the guide rail mounted on the slider 12 are advantageously guide rails according to the invention.

The wheels are preferably mounted on the sliders 12 by means of rolling bearings (of the roller and/or ball type).

The guide rail 10 comprises raceways 16 along which contact between the rolling elements 14 and the guide rail 10 occurs. The raceways are smoothed using abrasive tools (for example a grinding wheel) in order to reduce the friction and ensure a uniform and smooth slider movement.

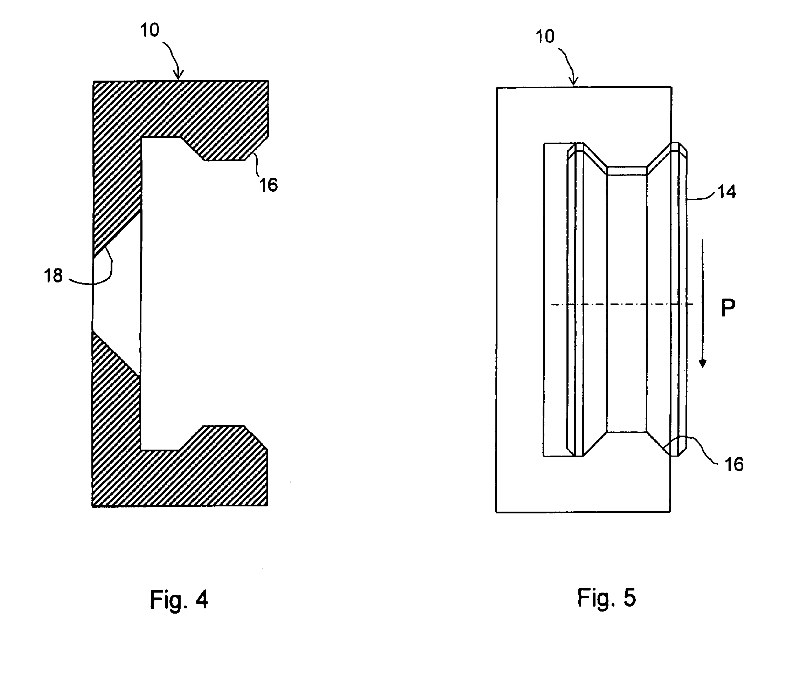

The guide rail 10 also comprises holes for operational assembly of the said guide rail. The holes 18 preferably have dimensions and are spaced from each other on the basis of the nominal load P which must be supported by the guide rail 10 in the perpendicular direction (see in particular Figure 5).

The outer surface of the guide rail 10 is treated using a combined nitriding and post-oxidation process. These thermochemical treatments of the surface influence in a manner known per se the surface hardness, the wear/friction behaviour, the fatigue strength and the corrosion resistance.

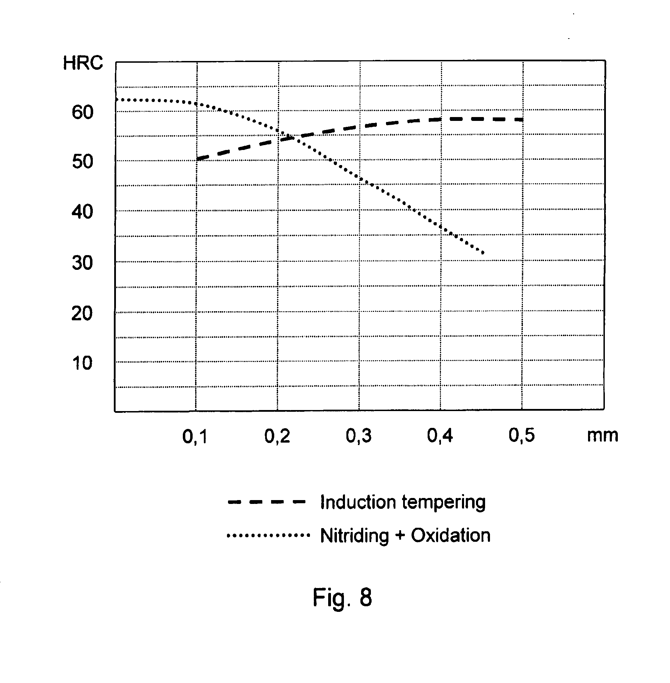

The guide rail 10, following the combined nitriding and post-oxidation treatments (which will be described below, with reference to the manufacturing method), reaches a surface hardness with the characteristic progression schematically indicated (by a dotted line) in Figure 8. Figure 8 also shows the progression (dashed line) of the Rockwell hardness which is achieved in the thickness by means of induction tempering.

Finally, the guide rail 10, following the combined nitriding and post-oxidation treatments, undergoes a micro-lubrication treatment, also described below, with reference to the method for production of the guide rail 10.

Following these treatments, the guide rail assumes a characteristic black colour and has an increased corrosion resistance.

In accordance with certain embodiments, the surface of the guide rail 10 is treated by means of smoothing or polishing prior to the thermochemical nitriding and post-oxidation treatments. According to these embodiments, the surface of the guide rail 10 is extremely uniform and substantially without roughness.

With reference to the method for manufacturing the guide rail 10 according to the invention, it comprises the following steps:
- providing a rough-formed guide rail made of drawn steel;
- boring the guide rail;
- smoothing the raceways of the guide rail by means of abrasive tools;
- nitriding and post-oxidation;
- micro-lubrication; and
- straightening the guide rail.

The drawing, boring, smoothing and straightening steps are steps which are performed in a manner widely known per se. In particular, the boring, smoothing and straightening steps are performed exactly as in the method of the prior art. The nitriding and post-oxidation treatments are known per se, but a short explanation is necessary in order to understand the invention more fully.

Nitriding is a method for diffusing nitrogen atoms in the surface of the metal. Molecular nitrogen is very common in nature; it is chemically inert and has dimensions too large to penetrate the crystal lattice of the metal. For this reason the various nitriding techniques are targeted at the source of the nascent atomic nitrogen.

Irrespective as to the method, nitriding is a process for diffusing the nitrogen in the metal and this diffusion, once the individual atoms have penetrated the surface, continues until the temperature is sufficiently high and until the nascent atomic nitrogen is supplied on the surface. Usually the nitriding process produces two different layers: a surface layer with a thickness of between about 15µm and 30µm and a deeper layer. The surface layer (also called white layer) is rich in Fe₂N and Fe₄N and is therefore extremely hard and brittle. The deeper layer is called the diffusion layer and is that where the nitrogen is diffused in the crystal lattice and gives the steel its most interesting properties.

Various nitriding methods are known and used on an industrial scale:
- (liquid) salt-bath nitriding, where the nitrogen (and also carbon) source is a liquid salt;
- plasma nitriding where the molecular nitrogen (N₂) is divided into ions by an electromagnetic field;
- gas nitriding which uses ammonia (NH₃) in the gaseous state.

The gas nitriding method may be controlled conventionally by controlling the degree of dissociation of the ammonia or, preferably, by means of more efficient control of the nitriding potential (Kn).

The nitriding treatment of the latter type is that which has proved to be most suitable for implementing the invention. A treatment of this type was developed and defined by Nitrex Metal Technologies Inc. of Burlington, Ontario, Canada. At present this treatment is commercially available under the name of Nitreg^{®}.

The exact understanding and application of the principles correlating the nitriding potential (Kn), temperature and treatment time form the basis of the Nitreg^{®} technology. By controlling the nitrogen concentration on the surface it is possible to control the growth of the white layer in a manner which is virtually independent from the formation of a desired diffusion layer. As a result of this approach it is possible to satisfy many stringent requirements and respect very small tolerances, in particular with regard to the thickness and the properties of the white layer.

As can be seen in Figure 8, the progression of the value HRC (Rockwell C-scale Hardness) in relation to the thickness obtained with nitriding has a progression which is different from that traditionally obtained with tempering. In fact, tempering does not have any effect on the skin and on the surface layers of the steel, owing to the dispersion of the carbon in the environment which occurs during drawing. The hardness provided by nitriding is instead greater on the skin and then gradually decreases across the diffusion layer. The effect of the two nitriding treatments is however comparable, because the optimum hardness for use considered here is about 55 HRC at a depth of about 0.25 mm.

As mentioned above, the nitriding treatment is followed by an oxidation treatment. This treatment is referred to here as "post-oxidation", indicating that it is performed immediately after nitriding in accordance with parameters which are well defined in advance. The person skilled in the art will therefore understand that this treatment does not resemble in any way other spontaneous oxidation phenomena which may arise during the working life of any guide rail. Post-oxidation tends to convert the outermost part (3-5 microns of thickness) of the white layer resulting from nitriding into a complex spinel structure. This structure consists mainly of iron oxide of the type Fe₃O₄ (also called magnetite). This post-oxidation treatment has the effect of improving the corrosion and wear resistance and decreasing the friction coefficient. Alongside these mechanical effects, a dark or black characteristic finish is obtained.

As for nitriding, also in the case of post-oxidation various methods are known and used on an industrial scale:
- (liquid) salt-bath oxidation;
- vapour oxidation;
- oxidation in a gaseous atmosphere; and
- ion-discharge oxidation.

A post-oxidation treatment which is suitable for implementing the invention is that developed and defined by Nitrex Metal Technologies Inc. of Burlington, Ontario, Canada. At present this treatment is commercially available under the name of ONC^{®}.

A first combined nitriding and post-oxidation treatment suitable for the invention was developed and defined by Nitrex Metal Technologies Inc.; this treatment is commercially available under the name of Nitreg^{®}-ONC^{®}.

A second combined nitriding and post-oxidation treatment suitable for the invention was developed and defined by TTN S.p.A. of Nerviano (MI), Italy; this treatment is commercially available under the name of Nipre^{®}.

Depending on the type of steel used, parts treated using the Nitreg^{®}-ONC^{®} or Nipre^{®} methods have an excellent behaviour during salt mist corrosion tests (for example, in accordance with the standard UNI EN ISO 9227 or the standard ASTM B117). Samples of the guide rail 10 according to the invention took 320 hours (ISO test 9227) to develop the first rust spot. The protection provided by post-oxidation is therefore greater than that provided by other treatments such chrome-plating, nickel-plating or zinc-plating.

The post-oxidation treatment does not alter significantly the characteristics imparted to the steel by the previous nitriding treatment. In particular, the ONC^{®} treatment does not alter significantly the characteristics imparted to the steel by the previous Nitreg^{®} nitriding treatment. As a result, the above observations regarding the properties imparted to the steel by nitriding (in particular Nitreg^{®}), for example the hardness, are still also applicable to nitrided and post-oxidized steel.

The Nitreg^{®}, ONC^{®} and Nipre^{®} treatments are technologies which are cleaner than other comparable technologies such as salt-bath nitriding or chrome-plating. The method for manufacturing a linear guide rail 10 according to the invention also comprises a step involving micro-impregnation of the surface layers with a lubricating and anti-corrosive substance. This substance may be for example a mineral oil with anti-oxidant additives.

In accordance with an embodiment of the invention, the method also comprises, prior to the thermochemical nitriding and post-oxidation treatments, a step involving smoothing or polishing of the surface of the guide rail 10. This step may be completed using abrasive tools (for example a brush).

As a result of this further smoothing or polishing step the subsequent thermochemical treatments are able to act on a surface which is extremely uniform and substantially free of roughness. It has in fact been noted that the corrosion preferably starts where there is even the slightest roughness on the surface. With this last step of the method it is therefore possible to obtain guide rails which are even more resistant to corrosion. In particular, samples of the guide rail 10 according to the invention, which have undergone polishing prior to nitriding or post-oxidation, took more than 500 hours (ISO test 9227) to develop the first rust spot.

In the light of that described above, the person skilled in the art can appreciate how the method according to the invention is able to obtain a linear guide rail 10 with characteristics which are superior to those of the guide rails of the known type. Moreover, with the method according to the invention, it is possible to produce the guide rail 10 very rapidly and at a lower initial outlay. In particular, the method according to the invention fully exploits the fact that the starting article (drawn product) is already sufficiently straight to be able to perform in an optimum manner the function of a linear guide rail. With the method according to the invention it is possible to exploit this characteristic feature of the drawn product such that all the intermediate straightening steps required in the known methods are avoided. The single final straightening operation is able to ensure an optimum quality of guide rail 10 according to the invention.

## Claims

1. Linear guide rail (10) suitable for co-operating with a slider (12), wherein contact between said linear guide rail (10) and said slider (12) is obtained by means of rolling elements (14), said guide rail being made of drawn steel and comprising:
- holes (18) for operational assembly, and
- raceways (16) suitable for making contact with the rolling elements (14), the surface of the raceways (16) being smoothed by means of abrasive tools;
**characterised in that** the surface of the guide rail (10) is treated using nitriding, post-oxidation and micro-lubrication processes.

2. Guide rail (10) according to Claim 1, wherein the surface of the guide rail (10) is treated with a smoothing or polishing process using abrasive tools.

3. Guide rail (10) according to Claim 1 or 2, wherein the rolling elements (14) comprise elements selected from the group comprising: wheels, wheels mounted on rolling bearings, and balls.

4. Guide rail (10) according to any one of Claims 1 to 3, wherein said steel is a case-hardening or a nitriding steel.

5. Guide rail (10) according to any one of Claims 1 to 3, wherein said steel is the steel defined as 20MnCr5.

6. Method for manufacturing a linear guide rail (10) for moving loads, comprising the steps of:
- providing a rough-formed guide rail made of drawn steel;
- boring the guide rail;
- smoothing the raceways of the guide rail by means of abrasive tools;
- nitriding and post-oxidation of the surface of the guide rail;
- micro-lubrication of the surface of the guide rail; and
- straightening the guide rail.

7. Method according to the preceding claim, wherein a step of smoothing or polishing the surface of the guide rail by means of abrasive tools is performed before the step of nitriding and post-oxidation of the surface of the guide rail.

8. Method according to Claim 6 or 7, wherein the step of nitriding and post-oxidation of the surface of the guide rail comprises a Nitreg^{®}-ONC^{®} treatment or a Nipre^{®} treatment.

9. Method according to any one of Claims 6 to 8, wherein the step of micro-lubrication of the surface of the guide rail (10) comprises a treatment involving micro-impregnation of the superficial layers with an anti-corrosive and lubricating substance.

## Patentansprüche

1. Linearführungsschiene (10), geeignet zum Zusammenwirken mit einem Gleitelement (12), wobei ein Kontakt zwischen der Linearführungsschiene (10) und dem Gleitelement (12) mittels Rollelementen (14) erhalten wird, wobei die Führungsschiene aus gezogenem Stahl hergestellt ist und aufweist:
- Löcher (18) zur operationellen Anordnung, und
- Laufbahnen (16), geeignet zum Herstellen eines Kontakts mit den Rollelementen (14), wobei die Oberfläche der Laufbahnen (16) mittels abrasiver Werkzeuge geglättet ist;
**dadurch gekennzeichnet dass**, die Oberfläche der Führungsschiene (10) behandelt ist mittels Nitrierung, Post-Oxidation und Mikro-Lubrikationsprozessen.

2. Führungsschiene (10) nach Anspruch 1, wobei die Oberfläche der Führungsschiene (10) behandelt ist mit einem Glaittungs- oder Polierprozess unter Verwendung abrasiver Werkzeuge.

3. Führungsschiene (10) nach Anspruch 1 oder 2, wobei die Rollelemente (14) Elemente aufweisen, die aus der Gruppe ausgewählt sind, bestehend aus Rädern, auf Rollenlagern montierten Rädern und Kugeln.

4. Führungsschiene (10) nach einem der Ansprüche 1 bis 3, wobei der Stahl ein Einsatzhärtungs- oder Nitrierungsstahl ist.

5. Führungsschiene (10) nach einem der Ansprüche 1 bis 3, wobei der Stahl der Stahl definiert als 20MnCr5 ist.

6. Verfahren zum Herstellen einer Linearführungsschiene (10) zum Bewegen von Lasten, aufweisend die Schritte:
- Bereitstellen einer grob-geformten Führungsschiene, die aus gezogenem Stahl hergestellt ist;
- Bohren der Führungsschiene;
- Glätten der Laufbahnen der Führungsschiene mittels abrasiver Werkzeuge;
- Nitrieren und Post-Oxidation der Oberfläche der Führungsschiene;
- Mikro-Lubrikation der Oberfläche der Führungsschiene; und
- Begradigen der Führungsschiene.

7. Verfahren nach dem vorhergehenden Anspruch, wobei ein Schritt des Glättens oder Polierens der Oberfläche der Führungsschiene mittels abrasiver Werkzeuge durchgeführt wird vor dem Schritt des Nitrierens und Post-Oxidation der Oberfläche der Führungsschiene.

8. Verfahren nach Anspruch 6 oder 7, wobei der Schritt des Nitrierens und Post-Oxidation der Oberfläche der Führungsschiene eine Nitreg®-OMC®-Behandlung oder eine Nipre®-Behandlung aufweist.

9. Verfahren nach einem der Ansprüche 6 bis 8, wobei der Schritt der Mikro-Lubrikation der Oberfläche, der Führungsschiene (10) eine Behandlung aufweist, die eine Mikro-Imprägnierung der oberflächlichen Schichten mit einer antikorrosiven und lubrizierenden Substanz umfasst.

## Revendications

1. Rail de guidage linéaire (10) approprié pour coopérer avec une glissière (12), dans lequel le contact entre ledit rail de guidage linéaire (10) et ladite glissière (12) est obtenu au moyen d'éléments roulants (14), ledit rail de guidage étant réalisé avec de l'acier étiré et comprenant:
des trous (18) pour l'assemblage opérationnel, et
des chemins de roulement (16) appropriés pour établir le contact avec les éléments roulants (14), la surface des chemins de roulement (16) étant lissée au moyen d'outils abrasifs;
**caractérisé en ce que** la surface du rail de guidage (10) est traitée en utilisant des procédés de nitruration, de post-oxydation et de micro-lubrification.

2. Rail de guidage (10) selon la revendication 1, dans lequel la surface du rail de guidage (10) est traitée avec un procédé de lissage ou de polissage en utilisant des outils abrasifs.

3. Rail de guidage (10) selon la revendication 1 ou 2, dans lequel les éléments roulants (14) comprennent des éléments choisis dans le groupe comprenant: des roues, des roues montrées sur des paliers à roulement et des billes.

4. Rail de guidage (10) selon l'une quelconque des revendications 1 à 3, dans lequel ledit acier est un acier cémenté ou un acier de nitruration.

5. Rail de guidage (10) selon l'une quelconque des revendications 1 à 3, dans lequel ledit acier est l'acier défini comme étant de l'acier 20MnCr5.

6. Procédé pour fabriquer un rail de guidage linéaire (10) afin de déplacer des charges, comprenant les étapes consistant à:
prévoir un rail de guidage formé grossièrement réalisé à partir d'acier étiré;
aléser le rail de guidage;
lisser les chemins de roulement du rail de guidage au moyen d'outils abrasifs;
nitrurer ou post-oxyder la surface du rail de guidage;
micro-lubrifier la surface du rail de guidage; et
redresser le rail de guidage.

7. Procédé selon la revendication précédente, dans lequel une étape consistant à lisser ou à polir la surface du rail de guidage au moyen d'outils abrasifs est réalisée avant l'étape consistant à nitrurer et post-oxyder la surface du rail de guidage.

8. Procédé selon la revendication 6 ou 7, dans lequel l'étape consistant à nitrurer et à post-oxyder la surface du rail de guidage comprend un traitement au Nitreg^{®}-ONC^{®} ou un traitement au Nippe^{®}.

9. Procédé selon l'une quelconque des revendications 6 à 8, dans lequel l'étape consistant à micro-lubrifier la surface du rail de guidage (10) comprend un traitement impliquant la micro-imprégnation des couches superficielles avec une substance anticorrosive et lubrifiante.
